(19) Europäisches Patentamt
European Patent Office
Office européen des brevets

(11) **EP 3 690 479 A1**

(12) **EUROPEAN PATENT APPLICATION**
published in accordance with Art. 153(4) EPC

(43) Date of publication:
**05.08.2020 Bulletin 2020/32**

(21) Application number: **18860344.3**

(22) Date of filing: **20.09.2018**

(51) Int Cl.:
**G01S 13/62** (2006.01)   **G08G 1/16** (2006.01)

(86) International application number:
**PCT/JP2018/034790**

(87) International publication number:
**WO 2019/065442 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2017   JP 2017191224**

(71) Applicant: **Mitsumi Electric Co., Ltd.**
**Tama-Shi, Tokyo 206-8567 (JP)**

(72) Inventor: **FUJII, Masanobu**
**Tokyo 206-8567 (JP)**

(74) Representative: **Lambsdorff & Lange**
**Patentanwälte**
**Partnerschaft mbB**
**Grillparzerstraße 12A**
**81675 München (DE)**

(54) **RADAR DEVICE AND OBJECT DETECTION METHOD**

(57)    The radar device comprises: a transmission unit that transmits, to an object, a transmission wave; a reception unit that receives a reflected wave, and generates a reception signal; and an object detection unit that acquires information relating to the object on the basis of the transmission signal and the reception signal. The object detection unit calculates, for each of a plurality of detection points within the same object: an azimuth angle $\varphi$ indicating the azimuth of the detection point with respect to the radar device; and a velocity component $V(\varphi)$ of the relative velocity A of the object along the azimuth. The object detection unit derives a relational expression for the azimuth angle $\varphi$ and the velocity component $V(\varphi)$, and derives a movement angle $\theta$ (= $\pi/2-\varphi$) indicating the movement direction of the object from the azimuth angle $\varphi$ when $V(cp) = 0$.

FIG. 2

## Description

Technical Field

The present invention relates to a radar apparatus and a target detection method for detecting a target in the periphery, and more particularly, to a technique of detecting a movement direction of the target.

Background Art

Intelligent Transport Systems (ITS) for solving problems related to road traffic using information and communication technology are being developed. In this field, techniques for detecting a surrounding environment (such as a vehicle, a pedestrian, an obstacle in the periphery) of a vehicle by a sensor, and for performing a safety support operation (for example, alert, brake control or the like) for avoiding or reducing a risk on the basis of a detection result have been put to practical use, for example.

As one such sensor, there is known a radar apparatus (a so-called millimeter wave radar) that uses millimeter waves having wavelengths of 1 to 10 mm (frequencies: 30 to 300 GHz). Since a millimeter wave radar uses radio waves, a certain level of sensitivity can advantageously be maintained even in bad weather such as rain or fog. In recent years, a high-resolution millimeter wave radar that uses millimeter waves in a wide band of 79 GHz band (77 to 81 GHz) has been put to practical use.

A frequency modulated-continuous wave (FMCW) method is widely used by vehicle-mounted radar apparatuses. According to the FMCW method, a continuous frequency-modulated wave (millimeter wave) is transmitted, and a reflected wave that is reflected from a target object (hereinafter referred to as "target") is received. The position

(distance and azimuth) or the relative velocity of the target is then detected on the basis of a frequency difference between transmission/reception signals.

Furthermore, information obtained by the radar apparatus can be used to determine a still object, detect an attachment angle of the radar apparatus or detect a movement direction of a target (such as a preceding vehicle) (for example, Patent Literatures (hereinafter, abbreviated as PTLs) 1 to 5). PTLs 4 and 5 disclose detection of a movement direction of a target on the basis of a change in the position of the target.

Citation List

Patent Literature

     PTL 1
     Japanese Patent No. 4992367
     PTL 2

Japanese Patent Application Laid-Open No. 2014-153256
PTL 3
Japanese Patent Application Laid-Open No. 2009-211212
PTL 4
Japanese Patent Application Laid-Open No. 2007-139650
PTL 5
Japanese Patent No. 5959581

Summary of Invention

Technical Problem

However, in the case of detecting the movement direction of a target by conventional methods, a plurality of transmission/reception processes are performed to detect a change in the position of the target, resulting in a long detection time.

An object of the present invention is to provide a radar apparatus and a target detection method by which the movement direction of a target can be detected in a short time, without detecting a change in the position of the target.

Solution to Problem

A radar apparatus according to one aspect of the present invention includes:

     a transmitting section that transmits a transmission wave that is based on a transmission signal toward a target;
     a receiving section that receives a reflected wave generated when the transmission wave is reflected on the target, and generates a reception signal; and
     a target detecting section that acquires information about the target on a basis of the transmission signal and the reception signal, in which:

         the target detecting section calculates, for each of a plurality of detected points on a same target, an azimuth angle $\varphi$ indicating an azimuth of the detected point with respect to the radar apparatus, and a velocity component $V(\varphi)$ of a relative velocity A of the target along the azimuth,
         the target detecting section determines a relational expression between the azimuth angle $\varphi$ and the velocity component $V(\varphi)$, and
         the target detecting section determines a movement angle $\theta$ indicating a movement direction of the target, from the azimuth angle $\varphi$ for when the velocity component $V(\varphi) = 0$ is true.

A target detection method according to one aspect of the present invention is a method of detecting a target, using a radar apparatus, the target detection method including:

a first step of transmitting a transmission wave that is based on a transmission signal toward a target;

a second step of receiving a reflected wave generated when the transmission wave is reflected on the target, and generating a reception signal; and

a third step of acquiring information about the target on a basis of the transmission signal and the reception signal, in which

in the third step:

an azimuth angle $\varphi$ indicating an azimuth of a detected point with respect to the radar apparatus, and a velocity component $V(\varphi)$ of a relative velocity A of the target along the azimuth are calculated for each of a plurality of detected points on a same target,

a relational expression between the azimuth angle $\varphi$ and the velocity component $V(\varphi)$ is determined, and

a movement angle $\theta$ indicating a movement direction of the target is determined from the azimuth angle $\varphi$ for when the velocity component $V(\varphi) = 0$ is true.

Advantageous Effects of Invention

According to the present invention, the movement direction of a target can be detected in a short time, without detecting a change in the position of the target.

Brief Description of Drawings

FIG. 1 is a diagram illustrating a configuration of a radar apparatus according to an embodiment of the present invention;

FIG. 2 is a flowchart illustrating an example of a target detection process by a signal processing section;

FIGS. 3A and 3B are diagrams illustrating detected points on a target;

FIG. 4 is a diagram illustrating a relative velocity at a detected point;

FIG. 5 is a diagram illustrating an example of a relational expression calculated by linear approximation; and

FIGS. 6A to 6F are diagrams illustrating examples of a relational expression calculated by curve approximation.

Description of Embodiments

Hereinafter, an embodiment of the present invention will be described in detail with reference to the accompanying drawings. In the present embodiment, a vehicle-mounted radar apparatus that is mounted on a vehicle is described as an example of a radar apparatus according to the present invention.

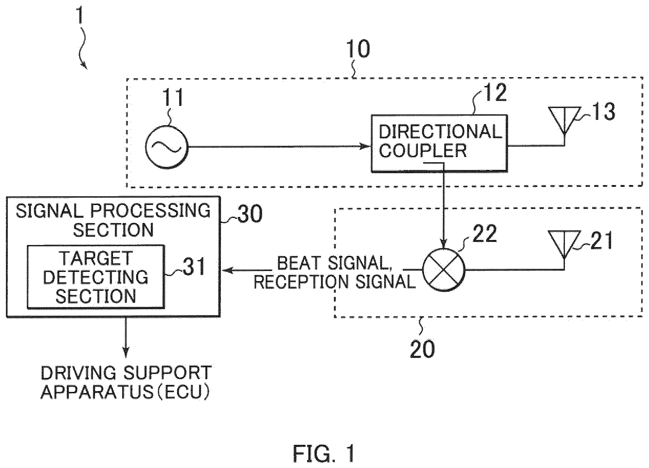

FIG. 1 is a diagram illustrating a configuration of radar apparatus 1 according to an embodiment of the present invention.

For example, radar apparatus 1 is a millimeter wave radar according to the FMCW method that uses millimeter waves in a 79 GHz band. For example, radar apparatus 1 is disposed on a front bumper or a rear bumper of a vehicle.

For example, radar apparatus 1 detects a surrounding environment (such as a vehicle, a pedestrian, an obstacle in the periphery) of a vehicle, and outputs information about the surrounding environment to an electronic control unit (ECU) of the vehicle. For example, the ECU performs a driving support operation for avoiding or reducing a risk on the basis of the information about the surrounding environment output from radar apparatus 1. The information about the surrounding environment includes the position (distance and azimuth) and relative velocity of a target.

As illustrated in FIG. 1, radar apparatus 1 includes transmitting section 10, receiving section 20, signal processing section 30 and the like. A one-chip IC on which transmitting section 10, receiving section 20 and signal processing section 30 are disposed on one substrate may be adopted as radar apparatus 1.

Transmitting section 10 includes signal source 11, directional coupler 12 and transmission antenna 13. Transmitting section 10 transmits a transmission wave that is based on a transmission signal toward a target.

Signal source 11 generates a transmission signal that is frequency-modulated (FM: frequency modulation), by adding a triangle-wave modulation signal to a control voltage of a voltage controlled oscillator (VCO).

Directional coupler 12 outputs the transmission signal to transmission antenna 13, and also, distributes a part of the transmission signal to mixer 22.

Transmission antenna 13 radiates the transmission signal to the surroundings of the vehicle as a transmission wave. When the transmission wave reaches a target, it is reflected according to reflectivity of the target.

Receiving section 20 includes reception antenna 21 and mixer 22. Receiving section 20 receives a reflected wave generated once the transmission wave is reflected on the target to generate a reception signal.

Reception antenna 21 receives the reflected wave reflected by the target, and outputs the same as a reception signal.

Mixer 22 mixes the reception signal output from reception antenna 21 and the transmission signal output from directional coupler 12, and generates a beat signal. Mixer 22 outputs the reception signal and the beat signal to signal processing section 30.

Signal processing section 30 includes target detecting section 31. Target detecting section 31 detects information about a target by performing frequency analysis by executing a process such as fast Fourier transform (FFT) on the reception signal and the beat signal. For example, target detecting section 31 is capable of detecting presence of a target on the basis of frequency distributions of the reception signal and the beat signal, and of detecting the position (distance and azimuth) and the relative velocity of the detected target. Information about the target detected by target detecting section 31 is output to the ECU of the vehicle that functions as a driving support apparatus, for example, via an external interface (not illustrated).

In recent years, the resolution of radar apparatuses is being increased, allowing features of a plurality of detected points on a same target to be individually detected. In the present embodiment, radar apparatus 1 has range resolution and azimuth resolution by which, in the case of detection of a target such as a vehicle (including bicycles), a plurality of detected points are included on the same target.

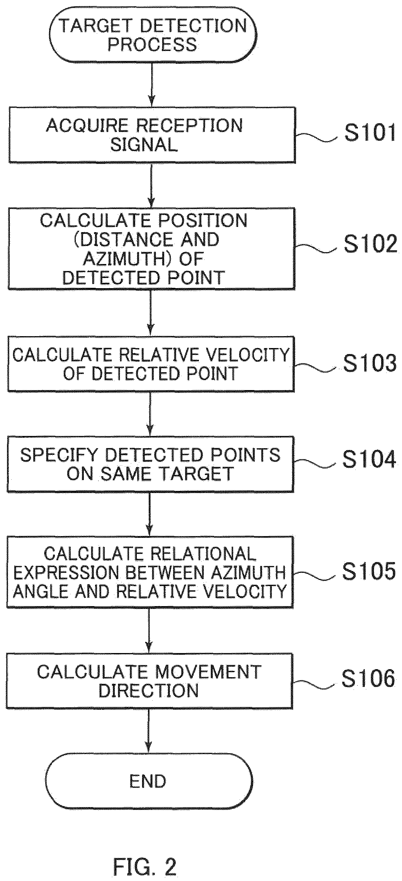

FIG. 2 is a flowchart illustrating an example of a target detection process by signal processing section 30 (target detecting section 31). For example, the target detection process illustrated in FIG. 2 is started when power of radar apparatus 1 is turned on, and a predetermined target detection program is executed by a CPU of signal processing section 30.

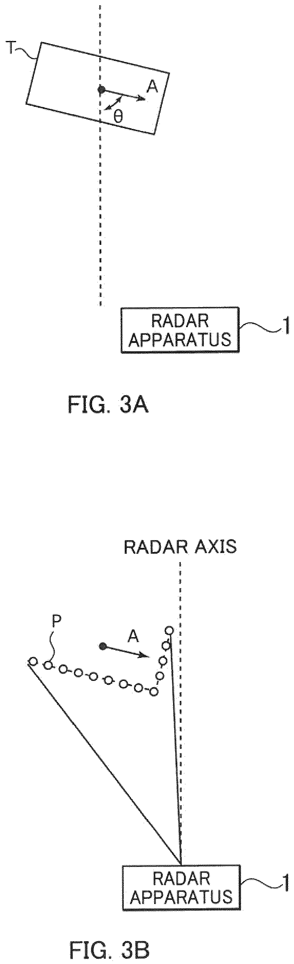

Here, as illustrated in FIG. 3A, a case will be described where a movement direction of target T moving at relative velocity A is determined. The movement direction of target T is angle $\theta$ (hereinafter referred to as "movement angle $\theta$") formed by a radar axis of radar apparatus 1 and the movement direction of target T. As illustrated in FIG. 3B, in the case where target T such as a vehicle is present in an observation range of radar apparatus 1, features are detected for a plurality of detected points P.

In step S101 in FIG. 2, signal processing section 30 (target detecting section 31) receives a reception signal and a beat signal for one frame output from receiving section 20.

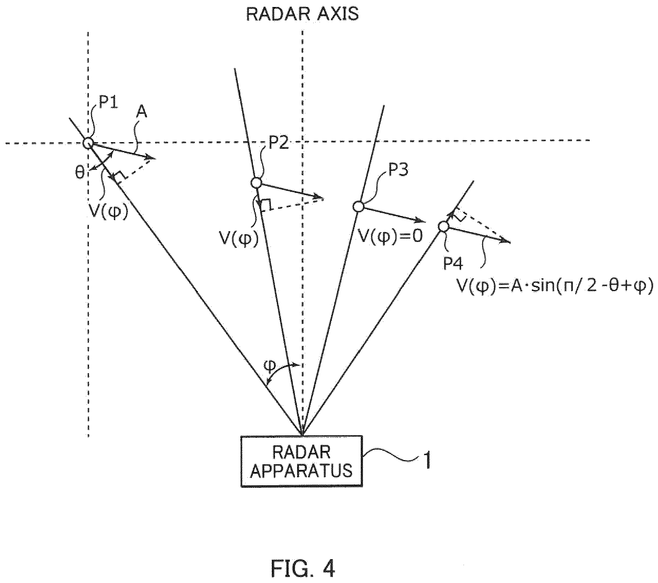

In step S102, signal processing section 30 calculates the position (distance and azimuth) of detected point P. The distance and the azimuth of detected point P may be determined by performing frequency analysis on the beat signal and the reception signal. An azimuth of detected point P with respect to radar apparatus 1 is expressed by angle $\varphi$ (hereinafter referred to as "azimuth angle $\varphi$") formed by the radar axis and the azimuth of detected point P (see FIG. 4).

In step S103, signal processing section 30 calculates relative velocity $V(\varphi)$ for each detected point P. Relative velocity $V(\varphi)$ that is calculated is a relative velocity along the azimuth of detected point P, and is dependent on azimuth angle $\varphi$. Relative velocity $V(\varphi)$ of detected point P on a same target is expressed by the following Expression (1), taking a relative velocity of the target as A and using movement angle $\theta$ indicating the movement direction of the target (see FIG. 4).

$$V(\varphi) = A \cdot \sin(\pi/2 - \theta + \varphi) \quad \dots (1)$$

That is, relative velocity $V(\varphi)$ that is calculated for each detected point P is a velocity component of relative velocity A of the entire target along the azimuth of detected point P.

Additionally, a known method of a conventional radar apparatus may be used for calculation of the position and the relative velocity of detected point P in step S102 and step S103, and thus, a detailed description thereof is omitted.

In step S104, signal processing section 30 identifies detected points P on a same target. For example, a group of detected points P, features of which are within a predetermined range, may be assumed to be detected points on a same target. Additionally, features of detected point P are a concept including the position and the relative velocity of detected point P.

In step S105, signal processing section 30 calculates a relational expression between azimuth angle $\varphi$ and relative velocity $V(\varphi)$ on the basis of features of detected point P.

For example, the relational expression between azimuth angle $\varphi$ and relative velocity $V(\varphi)$ is determined by linear approximation or curve approximation, on the basis of azimuth angles $\varphi$ and relative velocities $V(\varphi)$ acquired for a plurality of detected points P on the same target.

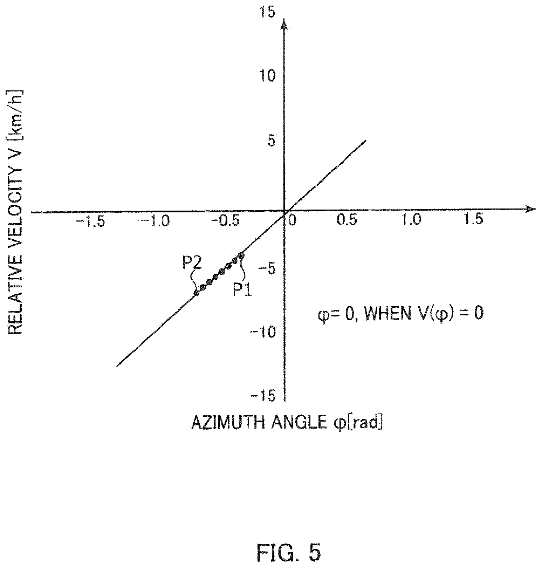

An example of the relational expression calculated by linear approximation is illustrated in FIG. 5. In this case, the relational expression may be calculated on the basis of azimuth angles $\varphi$ and relative velocities $V(\varphi)$ of first detected point P1 with largest azimuth angle $\varphi$ and second detected point P2 with smallest azimuth angle $\varphi$, for example. Furthermore, the relational expression may be calculated using Hough transform, for example.

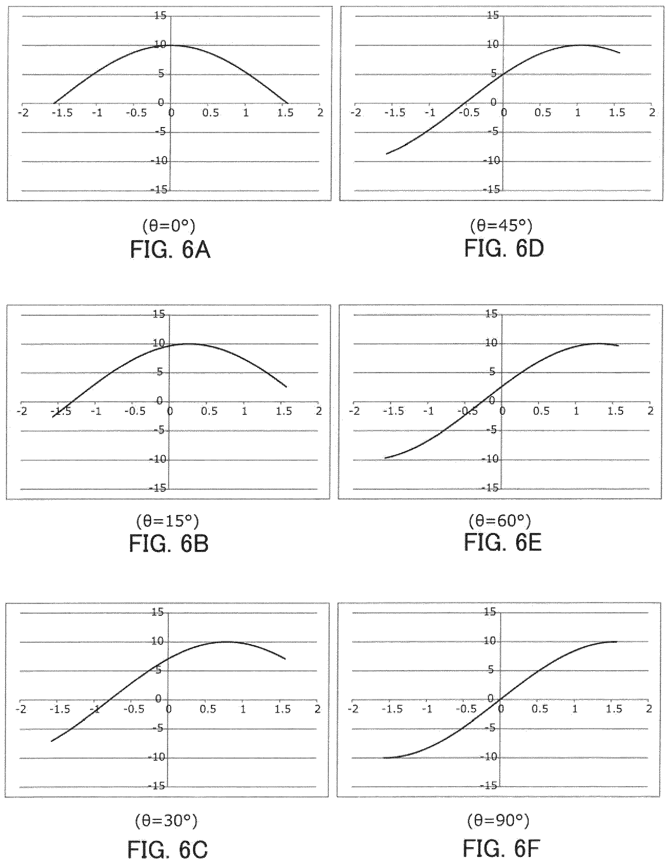

Examples of the relational expression calculated by curve approximation are illustrated in FIGS. 6A to 6F. FIGS. 6A to 6F illustrate cases where the relative velocity of target T is 10 km/h and movement angles $\theta$ are 0°, 15°, 30°, 45°, 60° and 90°. Because relative velocity $V(\varphi)$ is known to be expressed by Expression (1) described above, in the case of determining the relational expression by curve approximation, approximation is desirably performed by a trigonometric function. Alternatively, patterns of the trigonometric function as illustrated in FIGS. 6A to 6F may be prepared in advance, and one that best fits the features of detected point P may be selected.

In step S106 in FIG. 2, signal processing section 30 calculates the movement direction (movement angle $\theta$) of target T. Specifically, azimuth angle $\varphi$ at which relative velocity $V(\varphi)$ of detected point P is zero is determined by the relational expression obtained in step S105. Then, movement angle $\theta$ is determined by the result and Expression (1) described above.

For example, in the case where the relational expression illustrated in FIG. 5 or FIG. 6F is obtained, relative velocity V(φ) of detected point P is zero when azimuth angle φ is 0°. Accordingly, when V(φ) = 0 and φ = 0 are substituted in Expression (1) described above, θ = 90° is established. That is, target T is detected to be moving in a direction that crosses the radar axis at a right angle.

Additionally, in the case where a trigonometric function fitting the features of detected point P is selected, θ is already set, and calculation does not have to be performed further.

As described above, radar apparatus 1 includes transmitting section 10 that transmits a transmission wave that is based on a transmission signal toward target T, receiving section 20 that receives a reflected wave generated once the transmission wave is reflected on the target T to generate a reception signal, and target detecting section 31 (signal processing section 30) that acquires information about target T on the basis of the transmission signal and the reception signal. Target detecting section 31 calculates, for each of a plurality of detected points P on a same target, azimuth angle φ indicating the azimuth of detected point P with respect to radar apparatus 1, and velocity component V(φ) of relative velocity A of target T along the azimuth (steps S101 to S104 in FIG. 2), determines the relational expression between azimuth angle φ and velocity component V(φ) (step S105 in FIG. 2), and determines movement angle θ indicating the movement direction of target T from azimuth angle φ for when V(φ) = 0 is true.

Furthermore, the target detection method of radar apparatus 1 includes a first step of transmitting a transmission wave that is based on a transmission signal toward target T, a second step of receiving a reflected wave generated once the transmission wave is reflected on the target T to generate a reception signal, and a third step of acquiring information about target T on the basis of the transmission signal and the reception signal. In the third step, azimuth angle φ indicating the azimuth of detected point P with respect to radar apparatus 1, and velocity component V(φ) of relative velocity A of target T along the azimuth of detected point P are calculated for each of a plurality of detected points P on a same target, the relational expression between azimuth angle φ and velocity component V(φ) is determined, and movement angle θ indicating the movement direction of the target is determined from azimuth angle φ for when V(φ) = 0 is true.

With radar apparatus 1, the movement direction (movement angle θ) of target T may be detected in a short time without detecting a change in the position of target T. The movement direction of target T obtained by radar apparatus 1 may be used to determine an installation angle of radar apparatus 1. Furthermore, lane change of a vehicle in the periphery or the risk of collision may be determined using the movement direction of target T.

For example, the movement direction (movement angle θ) of target T obtained by radar apparatus 1 is output together with the position and the relative velocity of target T, to the driving support apparatus (ECU) of the vehicle, as information about the surrounding environment. The driving support apparatus performs a driving support operation for avoiding or reducing a risk on the basis of the information about the surrounding environment.

The driving support operation here includes an operation of automatically decelerating or stopping the vehicle by controlling a brake operation of the vehicle, an operation of automatically changing a traveling direction of the vehicle by controlling a steering operation, and an operation of issuing an alert to an occupant or to outside (an alert based on audio and/or information display).

The driving support operation of the vehicle is performed on the basis of the information about the surrounding environment. This significantly increases safety of other vehicles and pedestrians, not to mention the safety of the vehicle in question.

Heretofore, the invention made by the present inventor has been specifically described using an embodiment, but the present invention is not limited to the embodiment described above, and modifications may be made within the scope of the present invention.

For example, the method of calculating the movement direction (movement angle θ) of target T is not limited to that described in the embodiment. Specifically, relative velocity A of target T in Expression (1) described above is fixed at an estimate value, and movement angle θ that satisfies features (azimuth angle θ and relative velocity V(φ)) of detected point P is determined for each detected point P. Then, relative velocity A of target T is changed to the extent of velocity resolution, and movement angle θ is determined in the same manner for each detected point P. The range of movement angle θ is reduced, the higher the degree of fitting of the relational expression, or in other words, the closer the estimate value of relative velocity A of target T to an actual measurement value. An average value when the range of movement angle θ is the smallest may be taken as movement angle θ.

Furthermore, for example, radar apparatus 1 may use a method other than the FMCW method, such as a pulse method or frequency shift keying (FSK).

Furthermore, radar apparatus 1 according to the present invention may be mounted not only on a vehicle, but also on transportation equipment such as a railroad vehicle, a vessel or an aircraft, or on a roadside unit that is installed on a road. Sensors such as other radar apparatuses (such as a 76 GHz millimeter wave radar) and stereo cameras may be mounted in combination on the transportation equipment. The surrounding environment of the transportation equipment may be more accurately grasped by mounting a plurality of sensors.

Furthermore, the process of calculating the movement direction of target T performed by target detecting section 31 (steps S105 and S106 in FIG. 2) may be implemented by causing the ECU of the vehicle to execute a target detection program. That is, the target detection method of the present invention may be applied not only to the radar apparatus, but also to an external apparatus, such as the ECU, that uses an output from the radar apparatus. In such a case, an already installed radar apparatus may be effectively used.

The embodiment disclosed herein is illustrative in every aspect, and should be understood to be non-restrictive. The scope of the present invention is indicated not by the description given above but by the scope of the claims, and is intended to include all the modifications within the scope and meaning equivalent to those of the scope of the claims.

The disclosure of Japanese Patent Application No. 2017-191224, filed on September 29, 2017, including the specification, drawings and abstract, is incorporated herein by reference in its entirety.

Reference Signs List

1    Radar apparatus
10   Transmitting section
11   Signal source
12   Directional coupler
13   Transmission antenna
20   Receiving section
21   Reception antenna
22   Mixer
30   Signal processing section
31   Target detecting section

## Claims

1.  A radar apparatus comprising:

    a transmitting section that transmits a transmission wave that is based on a transmission signal toward a target;
    a receiving section that receives a reflected wave generated when the transmission wave is reflected on the target, and generates a reception signal; and
    a target detecting section that acquires information about the target on a basis of the transmission signal and the reception signal, wherein:

    the target detecting section calculates, for each of a plurality of detected points on a same target, an azimuth angle $\varphi$ indicating an azimuth of the detected point with respect to the radar apparatus, and a velocity

component $V(\varphi)$ of a relative velocity A of the target along the azimuth,
the target detecting section determines a relational expression between the azimuth angle $\varphi$ and the velocity component $V(\varphi)$, and
the target detecting section determines a movement angle $\theta$ indicating a movement direction of the target, from the azimuth angle $\varphi$ for when the velocity component $V(\varphi)$ = 0 is true.

2.  The radar apparatus according to claim 1, wherein the relational expression is an approximate expression that is calculated on a basis of the azimuth angle $\varphi$ and the velocity component $V(\varphi)$ acquired for each of the plurality of detected points.

3.  The radar apparatus according to claim 2, wherein the approximate expression is a linear approximate expression.

4.  The radar apparatus according to claim 2, wherein the approximate expression is expressed by a trigonometric function.

5.  The radar apparatus according to claim 4, wherein the approximate expression is selected by fitting, from a plurality of trigonometric functions that are prepared in advance.

6.  A target detection method of detecting a target, using a radar apparatus, the target detection method comprising:

    a first step of transmitting a transmission wave that is based on a transmission signal toward a target;
    a second step of receiving a reflected wave generated when the transmission wave is reflected on the target, and generating a reception signal; and
    a third step of acquiring information about the target on a basis of the transmission signal and the reception signal, wherein
    in the third step:

    an azimuth angle $\varphi$ indicating an azimuth of a detected point with respect to the radar apparatus, and a velocity component $V(\varphi)$ of a relative velocity A of the target along the azimuth are calculated for each of a plurality of detected points on a same target,
    a relational expression between the azimuth angle $\varphi$ and the velocity component $V(\varphi)$ is determined, and
    a movement angle $\theta$ indicating a movement direction of the target is determined from

the azimuth angle $\varphi$ for when the velocity component $V(\varphi) = 0$ is true.

1

10

11

12

13

DIRECTIONAL
COUPLER

SIGNAL PROCESSING
SECTION 30

TARGET
DETECTING 31
SECTION

BEAT SIGNAL,
RECEPTION SIGNAL

22

21

20

DRIVING SUPPORT
APPARATUS (ECU)

FIG. 1

```
        ┌──────────────────────┐
        │  TARGET DETECTION    │
        │     PROCESS          │
        └──────────────────────┘
                   │
                   ▼
        ┌──────────────────────┐
        │  ACQUIRE RECEPTION   │────  S101
        │      SIGNAL          │
        └──────────────────────┘
                   │
                   ▼
        ┌──────────────────────┐
        │  CALCULATE POSITION  │
        │   (DISTANCE AND      │────  S102
        │     AZIMUTH) OF      │
        │   DETECTED POINT     │
        └──────────────────────┘
                   │
                   ▼
        ┌──────────────────────┐
        │ CALCULATE RELATIVE   │────  S103
        │ VELOCITY             │
        │   OF DETECTED POINT  │
        └──────────────────────┘
                   │
                   ▼
        ┌──────────────────────┐
        │ SPECIFY DETECTED     │────  S104
        │   POINTS             │
        │   ON SAME TARGET     │
        └──────────────────────┘
                   │
                   ▼
        ┌──────────────────────┐
        │ CALCULATE RELATIONAL │
        │ EXPRESSION BETWEEN   │────  S105
        │ AZIMUTH ANGLE AND    │
        │ RELATIVE VELOCITY    │
        └──────────────────────┘
                   │
                   ▼
        ┌──────────────────────┐
        │ CALCULATE MOVEMENT   │────  S106
        │    DIRECTION         │
        └──────────────────────┘
                   │
                   ▼
        ┌──────────────────────┐
        │        END           │
        └──────────────────────┘
```

FIG. 2

FIG. 3A

FIG. 3B

RADAR AXIS

P1
A
θ
V(φ)

P2
V(φ)

P3
V(φ)=0

P4
V(φ)=A·sin(π/2 -θ+φ)

φ

RADAR
APPARATUS
1

FIG. 4

FIG. 5

(θ=0°)

FIG. 6A

(θ=15°)

FIG. 6B

(θ=30°)

FIG. 6C

(θ=45°)

FIG. 6D

(θ=60°)

FIG. 6E

(θ=90°)

FIG. 6F

## INTERNATIONAL SEARCH REPORT

International application No.

PCT/JP2018/034790

| A. CLASSIFICATION OF SUBJECT MATTER |
|---|
| Int.Cl. G01S13/62(2006.01)i, G08G1/16(2006.01)i |

According to International Patent Classification (IPC) or to both national classification and IPC

| B. FIELDS SEARCHED |
|---|

Minimum documentation searched (classification system followed by classification symbols)
Int.Cl. G01S7/00-G01S7/42, G01S13/00-G01S13/95, G08G1/16

Documentation searched other than minimum documentation to the extent that such documents are included in the fields searched

| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2007-147532 A (HITACHI, LTD.) 14 June 2007, entire text, all drawings & US 7463182 B1 | 1-6 |
| A | JP 2003-232853 A (HITACHI, LTD.) 22 August 2003, entire text, all drawings (Family: none) | 1-6 |

☒ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 12 December 2018 (12.12.2018) | 25 December 2018 (25.12.2018) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/034790 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2000-206241 A (HONDA MOTOR CO., LTD.) 28 July 2000, entire text, all drawings & US 6380884 B1 & DE 60027061 T2 | 1-6 |
| A | JP 2007-03395 A (MITSUBISHI ELECTRIC CORP.) 11 January 2007, entire text, all drawings (Family: none) | 1-6 |
| A | WO 2017/093314 A1 (AUTOLIV DEVELOPMENT AB) 08 June 2017, entire text, all drawings & CN 108291965 A | 1-6 |
| A | US 2015/0070207 A1 (VALEO RADAR SYSTEMS, INC.) 12 March 2015, entire text, all drawings & WO 2015/034581 A1 | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4992367 B
- JP 2014153256 A
- JP 2009211212 A
- JP 2007139650 A
- JP 5959581 B
- JP 2017191224 A